# EUROPÄISCHE PATENTSCHRIFT

(11) **EP 0 493 720 B1**
(45) Veröffentlichungstag und Bekanntmachung des Hinweises auf die Patenterteilung: **13.08.1997**
(21) Anmeldenummer: 91121311.4
(22) Anmeldetag: 12.12.1991
(51) Int. Cl.: B29B 17/02

(54) **Verfahren zur Wiederaufbereitung von thermoplastbeschichteten Verpackungsmaterialien sowie Thermoplastmaterial für weitere Verarbeitung**
Method for reprocessing thermoplastic coated packing materials and thermoplastic material for further manufacture
Méthode de retraitement de matériaux d'emballage contenant des couches thermoplastiques et matériau thermoplastique pour emploi ultérieur

(30) Priorität: 29.12.1990 DE 4042222
(43) Veröffentlichungstag der Anmeldung: 08.07.1992
(73) Patentinhaber: SCA Packaging Industriepapier GmbH, 83064 Raubling (DE)
(72) Erfinder: Menges, Wilhelm, W-8204 Brannenburg (DE)
(74) Vertreter: Fuchs, Luderschmidt & Partner Patentanwälte

(56) Entgegenhaltungen:
- EP-A- 0 304 667
- CA-A- 1 136 581
- FR-A- 2 510 428
- US-A- 4 379 525
- US-A- 4 440 635
- PATENT ABSTRACTS OF JAPAN vol. 6, no. 267 (M-182)(1145) 25. Dezember 1982 & JP-A-57 159 612 (YOSHINO KOGYOSHO K.K.) 1. Oktober 1982

## Beschreibung

Die Erfindung betrifft ein Verfahren zur Wiederaufbereitung von gebrauchtem, mit Thermoplasten beschichteten Verpackungsmaterial, das ein im wesentlichen aus pflanzlichen Faserstoffen bestehendes Trägermaterial aufweist, durch Zerkleinern des Verpackungsmaterials, Auflösen des Trägermaterials in wässriger Suspension und Trennen der Suspension in eine im wesentlichen Faserstoffe enthaltende Fraktion und eine im wesentlichen Thermoplastteile enthaltende Fraktion.

Thermoplastbeschichtete Verpackungsmaterialien auf der Basis von Papier oder Karton als Trägermaterial, d.h. also einem allgemein aus Papierstoff bestehenden Trägermaterial, welches im wesentlichen chemisch aufgeschlossenes pflanzliches Fasermaterial enthält, werden in großen Mengen u.a. in der Getränkeindustrie zum Abfüllen von Getränken verwendet. Ein solcher Getränkekarton ist im allgemeinen beidseitig mit einem Thermoplasten wie Polyethylen (PE) oder Polypropylen (PP) beschichtet, wobei der Thermoplastanteil in der Regel 20 - 25 Gewichtsprozent des gesamten Getränkekartons ausmacht. Die Thermoplastschichten können dabei selbst wieder mehrschichtig sein. Zur besseren Haltbarmachung bestimmter Getränkeprodukte, z.B. von Fruchtsäften, ist es zur Erhöhung der Licht- und Aromadichtigkeit des Verpackungsmaterials üblich, an dessen Innenseite eine hauchdünne Aluminiumschicht vorzusehen, die allgemein zwischen zwei PE-Schichten eingebettet ist. Zu diesem Zweck wird bereits das PE-Beschichtungsmaterial bei seiner Herstellung mit einer aufgedampften Aluminiumschicht versehen. Das Verpackungsmaterial kann ferner entweder auf dem Kartonsubstrat oder außen auf der Folienbeschichtung bedruckt sein.

Durch seine doppelseitige Beschichtung verhält sich der Verbundkarton nach außen im allgemeinen wie eine entsprechende Kunststoff-Folie. Übliche Anlagen zur Verarbeitung von Altpapier sind daher für die Aufbereitung und Wiederverwendung eines solchen Materials nicht geeignet. Besondere Maßnahmen wie der Einsatz von Dampf und Chemikalien sowie der Einsatz von Hochkonsistenz-Arbeitsgeräten sind im allgemeinen erforderlich, um ein solches Material wieder aufzuschließen.

Getränkeverpackungen und andere Verpackungsmaterialien ähnlicher Art verbleiben daher nach Entleerung im Haushalt im allgemeinen im Hausmüll und werden über die kommunale Müllabfuhr entsorgt. Bei der Deponie von Hausmüll verrottet der Getränkekarton infolge seiner doppelseitigen Beschichtung nur sehr schlecht und wird daher besser einer Müllverbrennung zugeführt.

Abgesehen von den großen Mengen noch durch Inhaltsreste kontaminierten Verpackungskartons gebrauchter Packungen fallen beispielsweise auch noch bei der Verarbeitung von Getränkekarton zu Getränkeverpackungen Abschnitte als Abfall an, die zwar nicht durch einen Getränkeinhalt kontaminiert sind, in ihrer möglichen Wiederverwertbarkeit aber gleichen Schwierigkeiten begegnen.

Das Grundmaterial für Verpackungsmaterialien wie Getränkekarton besteht im allgemeinen aus einem hochwertigen Fasermaterial, dessen Einsatz und Wiederverwendung in der Papierindustrie nicht nur aus Umweltbelastungsgründen wünschenswert ist. Auch der nicht unerhebliche Thermoplastanteil von etwa einem Viertel würde eine Wiederverwendung rechtfertigen. Durch die Einführung eines von der herstellenden und verbrauchenden Industrie zu organisierenden Sammelsystems wird Getränkekarton voraussichtlich eine getrennt erfaßte Altpapiersorte, die von der Papierindustrie mit ihren bisherigen Einrichtungen jedoch nur sehr bedingt und wenn, dann nur unter einem verhältnismäßig geringen Ausnutzungsanteil verarbeitet werden kann.

Im Folgenden soll der Ausdruck Getränkekarton allgemein mit Thermoplasten beschichtete Verpackungsmaterialien auf der Basis von Karton oder Papier umfassen. Der Begriff Faserstoff, aus welchem der Trägerkarton besteht, soll allgemein Faserstoffe umfassen, wie sie bekannterweise zur Herstellung von Karton in der Papierindustrie eingesetzt werden. Hierbei handelt es sich im wesentlichen um chemisch oder halbchemisch zu Cellulosefasern aufgeschlossenes Holz, wobei die Fasern außer Cellulose aber auch noch andere Bestandteile des Holzes aufweisen können. Unter Thermoplasten seien im wesentlichen Polyethylen (PE) und Polypropylen (PP) verstanden. Weitere, sich ähnlich verhaltende Materialien sollen durch den Begriff aber mit umfaßt sein.

Aus der FR-A-2 510 428 ist ein Verfahren zur Rückgewinnung der Bestandteile aus Abfallstoffen bekanntgeworden, die aus Aluminium und Papier und/oder Kunststoffen zusammengesetzt sind. Ausgehend von einem älteren Verfahren, bei dem es nur um die Rückgewinnung von Aluminium ging und bei dem Papier und Kunststoff zerstört wurden, steht auch bei dem genannten Verfahren die Aluminiumrückgewinnung bzw. die damit verbundene Energieersparnis im Vordergrund. Das Verfahren umfaßt die Schritte:
- Zerkleinern der Abfallstoffballen in Stücke mit einer Dimension kleiner/=100 mm,
- Behandlung der Stücke in einem Lösungsmittelbad,
- Trennen der Bestandteile in einer mechanisch bewegten wässrigen Suspension und
- Abführen der Bestandteile aus unterschiedlichen Höhenschichten der Suspension.

Das Zerkleinern soll die Wirkung der nachfolgenden Schritte verbessern, von denen der Behandlung in einem Lösungsmittelbad eine zentrale Bedeutung zukommt. Die Lösungsmittel sollen den Papieranteil aufschließen, die auf dem Aluminium befindlichen Lackschichten auflösen und/oder das Kunststoffmaterial von seinem Träger ablösen.

Bei diesem Verfahren wird als nachteilig angesehen, daß die benutzten Lösungsmittel, beispielsweise eine Mischung aus Essigsäure und Salzlösung gelöst in Dichlormethan, besondere Sorgfalt bei der Benutzung erfordern. Das Lösungsmittelbad soll mit einer Wasserschicht bedeckt gehalten werden, um ein Verdampfen der Lösungsmittelbestandteile zu verhindern. Insbesondere die Entsorgung unter Vermeidung von Umweltschäden erscheint aufwendig. Da das Verpackungsmaterial nur durch Abtropfen von den Lösungsmitteln befreit wird, wird bei dessen Übergabe in die nächste Behandlungsstation ein Verdampfen des Lösungsmittels und ein Einschleppen in die Aufbereitungsfraktionen nicht zu vermeiden sein.

Der Erfindung liegt die Aufgabe zugrunde, das bekannte Verfahren so weiter zu entwickeln, daß auf die Verwendung der genannten Lösungsmittel verzichtet werden kann. Es soll eine möglichst wirtschaftliche Wiederaufbereitung von mit thermoplastischem Material und ggf. Aluminium beschichteten Verpackungskarton aufgezeigt werden. Außerdem soll eine möglichst vollständige Wiedereinsetzbarkeit der im Rahmen der Aufbereitung gewonnenen Einzelmaterialien gewährleistet sein.

Zur Lösung dieser Aufgabe ist bei dem eingangs genannten Verfahren erfindungsgemäß die Kombination und Reihenfolge der nachstehenden Verfahrensschritte vorgesehen:
- das Verpackungsmaterial wird auf Stücke mit einer maximalen Erstreckung von 10 cm zerkleinert und mit einem im wesentlichen aus Wasser bestehenden Spülmittel gewaschen,
- das Spülmittel wird gesammelt, im Kreislauf geführt und es wird ständig ein Teil des Spülmittels aus dem Kreislauf ab- und einer biologischen Kläranlage zugeführt,
- die weitgehend von äußeren Verschmutzungen befreiten Stücke werden mittels einer Schneid- und/oder Reißfunktion oder eine schneidähnliche Funktion ausübenden Werkzeugen zu kleineren Flächenstücken mit einer maximalen Erstreckung von 2 cm zerkleinert,
- die kleineren Flächenstücke werden in wässrigem Medium unter Einwirkung von Prall-, Reib- und/oder Scherkräften behandelt,
- eine die aufgelösten Faserstoffe und die weitgehend von Faserstoffen befreiten, die Außenflächen der Flächenstücke bildenden Thermoplastteile enthaltende Suspension wird erzeugt und schließlich die Suspension in eine erste, im wesentlichen Faserstoffe enthaltende und eine zweite, im wesentlichen Plastikteilchen enthaltende Fraktion getrennt.

Eingehende Untersuchungen haben ergeben, daß Getränkekarton sinnvoll unter Einwirkung von Wasser als Suspensionsmittel und von geeigneten Kräften physikalisch weitgehend in seine Bestandteile, nämlich in die Thermoplastschicht und den Faserstoff aufgeteilt werden kann, wenn man den Getränkekarton in kleine Flächenstücke zerlegt bzw. zerschneidet. Die in Suspension befindlichen Thermoplastteile lassen sich dann in einem Trennvorgang von der zurückbleibenden Faserstoff-Suspension abtrennen, so daß sie nach weiterem Waschen, Entwässern und Trocknen in einem herkömmlichen Agglomerator und Regranulator in weiterverarbeitbares Thermoplastgranulat überführt werden können. Die erforderlichenfalls von weiteren Verunreinigungen befreite Faserstoff-Suspension kann unmittelbar einem Papierherstellungsprozeß zugeführt werden.

Es ist ferner gelungen, die ausschließlich aus Thermoplast bestehenden Beschichtungsteilchen gegebenenfalls von denjenigen zu trennen, die eine Aluminiumschichteinlage enthalten. Die Trennung dieser beiden Komponenten erfolgt in einer Hydrozykloneinrichtung in hoher wässriger Verdünnung.

Wenn der Anspruch 1 die Zerteilung des Getränkekartons in kleine Flächenstücke fordert, so sind diese Flächenstücke so zu bemessen, daß einerseits nicht der Faserstoff durch zu viele Schnittstellen im Durchschnitt gekürzt und somit in seiner möglichen Festigkeitsentwicklung beeinträchtigt wird, andererseits aber die Möglichkeit besteht, daß das Suspensionswasser von den Seitenkanten eines Flächenstückes her schnell genug in die Mittellage aus Faserstoff eindringen kann und durch die dadurch geschwächte Faserbindung unter Einfluß vertretbaren Energieeinsatzes das kleine Flächenstück im wesentlichen in zwei Lagen aufgespalten und dann die Fasern weiter von den nun einzelnen Thermoplastschicht-Teilchen abgelöst werden können. Ein zu starkes Kürzen von Fasern im Kantenbereich der zu erzeugenden kleinen Flächenstücke läßt sich dadurch vermindern, daß beim Zerkleinern des Getränkekartons in diese kleinen Flächenstücke eher eine reißende als schneidende Einwirkung auf das Material erfolgt. Dadurch kann bei diesem Verfahrensschritt auch zusätzlich vermieden werden, daß durch Quetschung an der Schnittstelle die Schnittkanten durch die beiderseitigen Thermoplastfolien verschlossen und der Zugang von Auflösewasser zum Kartonsubstrat erschwert wird. Es hat sich gezeigt, daß die kleinen Flächenstücke in ihrem größten Durchmesser 20 mm nicht überschreiten sollten, vorzugsweise aber im Bereich von 5 - 12 mm, insbesondere möglichst im Bereich von etwa 6 - 8 mm liegen sollten. Die kleinen Flächenstücke sollten dabei möglichst in allen Richtungen in etwa einen gleichen Durchmesser aufweisen, womit ausgedrückt werden soll, daß sie nicht speziell streifenförmig oder dergleichen geschnitten zu werden brauchen.

In besonderer Ausgestaltung des erfindungsgemäßen Verfahrens finden das bevorzugt reißende Zerschneiden des Getränkekartons in die kleinen Flächenstücke und die Energieeinwirkung zu deren Auflösung in ein und demselben Arbeitsgang in einem geeigneten Aggregat statt. Die Begrenzung der Flächenstücke auf bestimmte Größen kann im Rahmen dieses Verfahrensschrittes durch Vorsehen eines Siebes erfolgen, welches die bereits genügend kleinen Flächenstücke passieren läßt, die größeren aber im Zerkleinerungs- und Auflöseprozeß noch zurückhält. Der Auflösevorgang, d.h. das möglichst weitgehende Trennen der Thermoplastteilchen vom Faserstoff kann in einer Rührbütte mit geeigneter Suspensionskonsistenz von ca.2 - 4 % unter Einwirkung der Agitationsenergie noch vervollständigt werden.

Bei verhältnismäßig leicht auflösbarem Kartonsubstrat kann es ausreichen, die das Zerkleinerungsaggregat verlassenden kleinen Flächenstücke in einer nachgeschalteten geeigneten Rührbütte in ihre Bestandteile aufzutrennen. Eine Wasserzugabe im Zerkleinerungsaggregat sollte aber zumindest erfolgen.

Ein für die beschriebene Verfahrensmaßnahmen geeignetes Aggregat besteht beispielsweise aus einem im wesentlichen zylindrischen Gehäuse mit horizontaler Zylinderachse sowie einer oberen Beschickungsöffnung und einer als Siebboden ausgebildeten unteren Austragsfläche. Im Gehäuse ist um die Zylinderachse rotierend ein Werkzeugträger angeordnet, dessen auf einem gedachten Zylindermantel angeordnete Schneid- und/oder Quetschwerkzeuge mit Gegenwerkzeugen zusammenarbeiten, die an der Innenfläche des Gehäuses im wesentlichen entlang von Zylindermantellinien angeordnet sind. Geräte der vorstehend beschriebenen Art sind für andere Einsatzzwecke an sich bekannt, ihre Verwendung für die hier beschriebenen Verfahrensmaßnahmen ist jedoch neu. Bei Versuchen ist für das Zerkleinern und Auflösen des Getränkekartons beispielsweise der von der Firma Condux angebotetene Waschgranulator CS 500/1000IIIA mit Sieblochungen im Bereich von ca. 8-10 mm mit Erfolg eingesetzt worden.

Die einen solchen Granulator verlassende Suspension kann, wie gesagt, unter weiterer Rührwerkseinwirkung bei einer pumpfähigen Konsistenz von etwa 2- 4 % zwischengelagert werden, wobei der Auflösevorgang sich weiter fortsetzt. Um die Pumpfähigkeit der Suspension zu erreichen, wird im Waschgranulator entweder Frischwasser oder gereinigtes Prozeßwasser zugesetzt. Für den Auflösevorgang werden weder Dampf noch irgendwelche Chemikalien benötigt.

Die Suspension, welche den aufgelösten und zerkleinerten Getränkekarton enthält, wird dann der Trennstufe zugeführt, in der die Suspension in eine erste Fraktion aufgetrennt wird, welche im wesentlichen eine Faserstoffsuspension ist, und eine zweite Fraktion, die in Suspension im wesentlichen die Thermoplastteilchen enthält. Als Aggregat für die Trennung hat sich beispielsweise der von der Firma Voith in Heidenheim angebotene Voith-Siebcontaminex bei Einsatz eines Lochsiebes von 3 mm als geeignet erwiesen. Dieses Gerät weist zusätzlich noch eine Schwerschmutzschleuse auf, über die intermittierend angesammelte Schwerteile wie Kartonsverschlußteile, harte Kunststoffe und dergleichen ausgetragen werden können. Die Thermoplastfraktion wird vorteilhafterweise noch nachgewaschen, um sie von weiterem Faserstoff zu befreien, der noch der Faserstoff-Fraktion aus der ersten Trennstufe zugeführt werden kann. Als Nachwaschgerät für die Thermoplastfraktion kann beispielsweise ein Voith-Turbowasher mit einer Sieblochung von 2,6 mm Durchmesser im getakteten Betrieb dienen.

Auch die erste Faserstoff-Fraktion wird zweckmäßigerweise noch einer Feinsortierung bei einer Stoffdichte von etwa 1 % unterworfen. Die in dieser Feinsortierung noch abgetrennten Thermoplastteilchen können umgekehrt noch der Thermoplastfraktion zugeführt werden. Eine solche Feinsortierung kann mit bekannten Mitteln erfolgen. Versuche haben gezeigt, daß sich mit einem solchen nachgeschalteten Feinsortierschritt für die Faserstoffsuspension alle sichtbaren bunten Folienteilchen auch feinerer Struktur als Spuckstoff abtrennen lassen.

Gebrauchter Getränkekarton ist im allgemeinen an seiner Außenoberfläche bedruckt. Die Zerkleinerung und mechanische Auflösung des Kartons kann dazu führen, daß sich Farbpartikel, auch wenn sie sich ursprünglich auf der Thermoplastfolie befanden, teilweise in feinster Form ablösen und in die Faserstoffsuspension gelangen, in der sie sich als Trübung bemerkbar machen. Um diese feinsten Verunreinigungen in Form von Druckfarbenteilchen und dergleichen aus dem regenerierten Faserstoff zu entfernen, ist es zweckmäßig, an die Feinsortierung noch eine Waschflotation des Faserstoffes anzuschließen. Hierdurch ergibt sich eine wesentliche Aufhellung des Faserstoffes, die für die Papiererzeugung im allgemeinen sehr erwünscht ist. Zur Entfernung von Druckfarbenbestandteilen aus Faserstoffsuspensionen kann auf bekannte Techniken aus der Altpapieraufbereitung zurückgegriffen werden.

Der so erhaltene endgültig gereinigte Regeneratfaserstoff kann dann auf eine normale Büttenkonsistenz eingedickt und unmittelbar der Herstellung von neuem Papier zugeführt werden. Sollte eine integrierte Weiterverarbeitung nicht möglich sein, kann der Faserstoff natürlich auch eingedickt und getrocknet werden, wodurch möglicherweise aber die Wirtschaftlichkeit des Verfahrens beeinträchtigt wird.

Die aus dem Trennvorgang erhaltene Thermoplastteilchen-Fraktion wird zweckmäßigerweise in einem Zyklon von eventuellen schwereren Teilchen befreit und das Akzept des Zyklons über eine Entwässerungszentrifuge vorentwässert und eventuell weiter getrocknet. Ein derartiges Regenerat wäre an sich schon handhabungsfähig, um es nach Abfüllen in Säcke oder Behälter einer weiteren Aufbereitung zuzuführen. Zweckmäßigerweise erfolgt jedoch eine weitere Aufbereitung in die Form eines in der Kunststoffverarbeitungsindustrie allgemein üblichen Granulates integriert in der gleichen Anlage. Die Agglomerierung und Regranulierung des Thermoplastmaterials kann beispielsweise in einer Pallmann-Anlage vom Typ PFV 250/60 erfolgen. Das erhaltene Granulat ist ein rieselfähiges Produkt, welches für die Weiterverarbeitung zu verschiedenen Erzeugnissen geeignet ist. Dieses als Regenerat erhaltene Granulat enthält noch einen geringen Faserstoffanteil, der in der Größenordnung von 5 % liegen kann. Insofern Getränkekarton mitverarbeitet wird, dessen innere Beschichtung eine Aluminiumschicht enthält, fallen in der Thermoplastteilchenfraktion Teilchen an, die diese Aluminiumeinlage aufweisen. Es hat sich erstaunlicherweise gezeigt, daß sich diese aluminiumhaltigen Thermoplastteilchen von reinen Thermoplastteilchen in wässriger Suspension von möglichst unter 1 Gew.-% atro, vorzugsweise bei Suspensionsdichten von etwa 0,5 Gew.-% atro in einer Hydrozykloneinrichtung unter vom Fachmann einzustellenden, geeigneten Bedingungen abtrennen lassen. Der Aluminiumanteil in den aluminiumhaltigen Thermoplastteilchen liegt etwa bei 15 bis 20 Gew.-%. Hierdurch erhalten diese Teilchen ein spezifisches Gewicht von ρ>1, so daß ihre Trennung von reinen Thermoplasten mit einem spezifischen Gewicht von ρ ∼ 0,9 in der Hydrozykloneinrichtung möglich wird. Es lassen sich somit zwei Thermoplastfraktionen erzeugen, von denen die eine Aluminium enthält, die andere aber im wesentlichen, d.h. bis auf einen geringen Restfaseranteil aus reinem Thermoplast besteht und unmittelbar für einen Wiedereinsatz geeignet ist.

Versuche mit nach dem hier beschriebenen Verfahren regeneriertem Niederdruckpolyethylen (LDPE) haben ergeben, daß sich das Regenerat einwandfrei im Spritzgießverfahren verarbeiten läßt. Im Vergleich zu frischem LDPE weist es offenbar aufgrund seines Faseranteiles sogar eine höhere Zugfestigkeit und eine höhere Biegesteifigkeit auf. Die Bruchdehnung ist jedoch entsprechend geringer. Das Regenerat läßt sich daher vorteilthaft für alle Anwendungszwecke einsetzen, bei denen höhere Zugfestigkeit und Biegesteifigkeit erwünscht sind, auf eine hohe Bruchdehnung aber verzichtet werden kann. Auch ein gewisser Anteil von Aluminium aus Aluminiumfolienbestandteilen des Getränkekartons kann sich vorteilhaft auf die Eigenschaften des Regenerates, beispielsweise auf die Gleitfähigkeit der daraus erzeugten Produkte auswirken. Wichtig ist lediglich, daß die Verarbeitungstemperatur des Regenerat-Granulates unter einer Temperatur gehalten wird, bei der sich die im Regenerat enthaltenen Fasern thermisch zersetzen. Die maximal zulässige Temperatur kann je nach Faserstoffanteil unterschiedlich sein. Sie sollte nicht über 230°C liegen, vorteilhafterweise liegt sie unterhalb von 180°C, wobei die untere Grenze jedoch nicht bis in den bei 125°C liegenden Kristallitschmelzbereich für LDPE reichen darf.

Die an dem Thermoplastregenerat festgestellten günstigen Eigenschaften können auch erreicht werden, indem man frischem Thermoplastmaterial einen gewissen Anteil an Papierfaserstoffen beimischt. Insoweit sich die vorteilhaften Eigenschaften durch einen Regeneratstoff erzielen lassen, wird dieser Weg jedoch im allgemeinen zu bevorzugen sein. Jedenfalls ist es auch bei der Gewinnung des Thermoplastregenerates möglich, die Eigenschaften des Regenerates durch Steuerung des Faserstoffgehaltes im Zuge der vorstehend beschriebenen Wiederaufbereitung zu beeinflussen oder, wenn dies nicht unmittelbar möglich sein sollte, den Faserstoffgehalt durch nachträgliche Zugabe von beispielsweise ebenfalls regeneriertem Faserstoff auf einen bestimmten erwünschten Wert einzustellen. Auf diese Weise wird aus der Wiederaufarbeitung von Getränkekarton ein neues thermoplastisches Material mit speziellen Eigenschaften erhalten.

Das vorstehend beschriebene Wiederaufbereitunsverfahren ist zur Aufbereitung von Getränkekarton, der sich als Abfall aus seiner Verarbeitung ergibt, ohne weiteres geeignet. Für die Aufbereitung von gebrauchtem Getränkekarton, der durch Getränkereste kontaminiert ist, ist jedoch eine zusätzliche Vorstufe für die Wiederaufbereitung erforderlich.

Es hat sich gezeigt, daß sich die dem gebrauchten Karton anhaftenden Getränkereste und ähnliche äußere Verunreinigungen in der Regel sogar mit kaltem Wasser als Spülmittel derart weitgehend entfernen lassen, daß sich der gespülte Karton nach dem vorstehend beschriebenen Verfahren weiter verarbeiten läßt. Voraussetzung für einen wirksamen Spülvorgang ist jedoch, daß der gebrauchte Karton auch wirklich von allen Seiten vom Spülmittel umspült werden kann. Hierfür sieht die Erfindung vor, daß die gebrauchten Getränkeverpackungen derart zerschnitten werden, daß die verbleibenden Schnittstücke allseitig wirksam von dem Spülmittel umströmt werden können. Diese Maßnahme gewährleistet, daß gerade auch diejenigen Oberflächen des Verpackungsmaterials bespült werden, die die Innenfläche einer Verpackung bildeten. Es hat sich gezeigt, daß das Ziel einer guten Reinigung des gebrauchten Verpackungsmaterials dann erreicht werden kann, wenn die Schnittstücke in ihrer Ausdehnung nicht größer als 10 cm sind. Vorteilhafterweise weisen die Schnittstücke eine Größe auf, bei der der größte Durchmesser 3 - 7 cm, vorzugsweise etwa 5 cm beträgt.

Der Schneidvorgang ist bei diesem Verfahrensschritt zweckmäßigerweise so zu führen, daß die Thermoplastbeschichtungen längs der Schnittkante möglichst zusammengequetscht werden, um ein Eindringen der Spülflüssigkeit in die Faserstoffinnenschicht des Kartons zu verhindern. Das Zerteilen des Getränkekartons in einzelne separate Flächenstücke kann vor dem eigentlichen Spülvorgang erfolgen, vorteilhafterweise wird es aber in den Spülvorgang integriert. Der Spülvorgang kann dann derart ablaufen, daß die gebrauchten Verpackungen unmittelbar bei Aufbereitungsbeginn mit dem Spülmittel in Verbindung gebracht werden, um bereits außen an den Verpackungen anhaftende Kontaminate abzuspülen, während die Verpackungen dann während des weiteren Spülvorganges zerkleinert und die erhaltenen Flächenabschnitte dann intensiv vom Spülmittel umströmt werden. Neben der Arbeit der Schneidwerkzeuge kann zusätzlich eine leichte mechanische Agitation zur Unterstützung der Fremdstoffablösung auf den Karton ausgeübt werden, wobei jedoch zu vermeiden ist, daß in dieser Verfahrensstufe bereits eine Auflösung des Kartons stattfindet. Die Auflöseeinrichtungen sollen Bereiche oder spezielle Vorkehrungen aufweisen, mit deren Hilfe bereits vor der Zerkleinerung nicht zuletzt zum Schonen der Messer Schwerteile aus dem Abfallmaterial ausgeschieden werden.

Diese Entkontaminierungswäsche kann auch zweistufig ausgeführt werden, indem der in Säcken oder gepreßten Ballen angelieferte Altkarton nach einer gegebenenfalls erfolgten Disintegration dieser Gebinde in einzelne Verpackungen zuerst vorgewaschen, dann grob zerschnitten und die Schnittstücke dann nochmals gewaschen werden.

Der gewaschene Getränkekarton wird in einem Entwässerungsaggregat, beispielweise einer Entwässerungsschnecke weitgehend vom Spülmittel befreit, bevor er zur Weiterverarbeitung beispielsweise in den weiter oben beschriebenen Waschgranulator gelangt.

Das Spülmittel wird unmittelbar aus dem Aufbereitungsprozeß entfernt und, insofern vorhanden, direkt einer biologischen Klärstufe zugeführt. Das Spülwasser ist im allgemeinen nur schwach mit CSB belastet.

Die Zerteilung des Getränkekartons in die vom Spülmittel umspülbaren Flächenabschnitte kann beispielsweise mit einem Gerät erfolgen, in dessen Gehäuse zwei mit Scheibenmessern besetzte rotierende Messerwellen angeordnet sind, wobei sich jeweils zwei sich gegenüberliegende Messer der beiden Wellen in Schereingriff miteinander befinden. Wird der Karton in den Einzugsbereich zwischen den beiden Messerwellen eingeführt, wird er schneidend in entsprechend kleinere Flächenabschnitte zerteilt. Die Verwendung derartiger Werkzeuge für den hier beschriebenen Einsatzzweck ist neu.

Es besteht die Möglichkeit, bei Verarbeitung von gebrauchten Verpackungsmaterialien die Verfahrensschritte des Zerteilens des Materials in umspülbare Flächenabschnitte, des Waschens dieser Abschnitte und der anschließenden Weiterzerkleinerung und Zerfaserung in einem Bearbeitungsaggregat zu integrieren. Dabei sollte jedoch weitgehend verhindert werden, daß die Spülflüssigkeit mit in den Feinzerkleinerungsschritt gelangt. Um den das kombinierte Aggregat verlassenden weitgehend zerfaserten Stoff von weiterer Spülflüssigkeit zu befreien ist es zweckmäßig, ihn teilweise zu entwässern und mit Frischwasser bzw. gereinigtem Prozeßwasser nachzuspülen. Die gesammelte Spülflüssigkeit kann in diesem Bereich im Kreislauf geführt werden, wobei jedoch ständig ein Anteil aus dem Prozeß zu entfernen ist. Dieser Anteil wird durch das Frischwasser aus der Nachspülung ersetzt.

Mit dem vorbeschriebenen Aufbereitungsverfahren ist es möglich, selbst gebrauchten Getränkekarton aus der Altmaterialerfassung derart vollständig zu Regeneratmaterialien aufzubereiten, daß nur eine äußerst geringe Menge an echtem Abfallmaterial übrigbleibt, die in vielen Fällen sogar unter 1 % liegen wird.

Zur weiteren Erläuterung der Erfindung ist ein Verfahrensschema einer beispielhaften Anlage zur Durchführung des erfindungsgemäßen Verfahrens beigefügt. Das Schema ist unter Heranziehung der nachfolgenden Bezugszeichenliste für den auf diesem Gebiet tätigen Fachmann verständlich.

### Bezugszeichenliste

- 2: Aufgabeförderband
- 4: Gebrauchter Getränkekarton
- 6: Vereinzelungsförderband erhöhter Geschwindigkeit
- 8: Schüttelsieb
- 10: Aufarbeitungsvorrichtung
- 12: 1. Zerkleinerungsaggregat
- 14: Umwälztrog mit Rührwerk
- 16: 2. Zerkleinerungsaggregat
- 18: Eindicker
- 20: Spülflüssigkeitskreislaufbütte
- 22: Rührbütte
- 24: Fraktionierer
- 26: Schwerschmutzabscheider
- 28: Nachfraktionierer
- 30: Faserstoffbütte
- 32: Vertikalsortierer
- 34: Verdünnungsbütte
- 36: Waschflotation
- 38: Schwimmstoffeindicker
- 40: Stoffeindicker
- 42: Fertigstoffbütte
- 44: Reststoffbütte für nicht zerfaserbare Stoffe
- 46: zweistufige Zyklonabscheidung für spezifisch schwerere Stoffe als Thermoplast, bzw. aluminiumhaltige Thermoplastteile
- 48: Zentrifuge Thermoplastentwässerung
- 50: Thermoplasttrocknung
- 52: Thermoplastgranulierung
- 54: Deponiecontainer
- 56: Sammelbütte Aufbereitungsfiltrat zur biologischen Klärung
- 58: Wasserversorgung

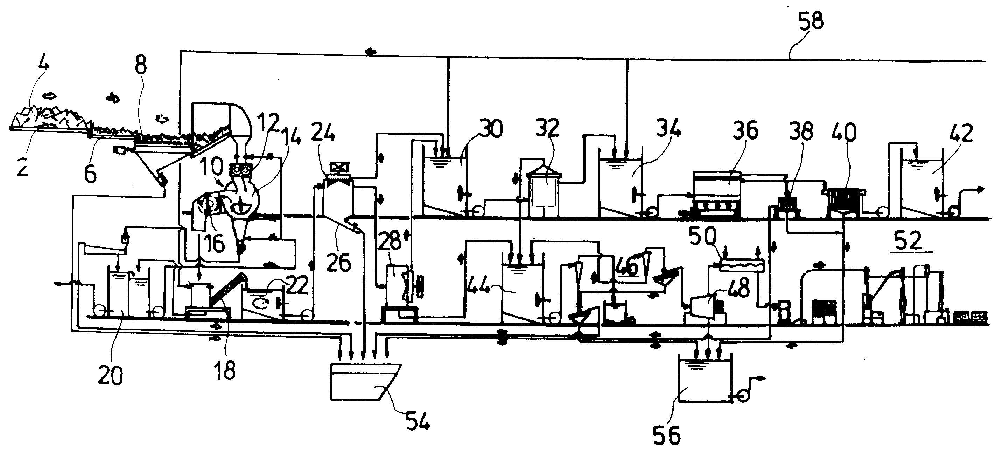

## Patentansprüche

1. Verfahren zur Wiederaufbereitung von gebrauchtem, mit Thermoplasten beschichteten Verpackungsmaterial, das ein im wesentlichen aus pflanzlichen Faserstoffen bestehendes Trägermaterial aufweist, durch Zerkleinern des Verpackungsmaterials, Auflösen des Trägermaterials in wässriger Suspension und Trennen der Suspension in eine im wesentlichen Faserstoffe enthaltende Fraktion und eine im wesentlichen Thermoplastteile enthaltende Fraktion, wobei
- das Verpackungsmaterial auf Stücke mit einer maximalen Erstreckung von 10 cm zerkleinert und mit einem im wesentlichen aus Wasser bestehenden Spülmittel gewaschen wird,
- das Spülmittel gesammelt, im Kreislauf geführt wird und ständig ein Teil des Spülmittels aus dem Kreislauf ab- und einer biologischen Kläranlage zugeführt wird,
- die weitgehend von äußeren Verschmutzungen befreiten Stücke mittels eine Schneid- und/oder Reißfunktion oder eine schneidähnliche Funktion ausübenden Werkzeugen zu kleineren Flächenstücken mit einer maximalen Erstreckung von 2 cm zerkleinert werden,
- die kleineren Flächenstücke in wässrigem Medium unter Einwirkung von Prall-, Reib- und/oder Scherkräften behandelt werden,
- eine die aufgelösten Faserstoffe und die weitgehend von Faserstoffen befreiten, die Außenflächen der Flächenstücke bildenden Thermoplastteile enthaltende Suspension erzeugt wird und schließlich
- die Suspension in eine erste, im wesentlichen Faserstoffe enthaltende und eine zweite, im wesentlichen Plastikteilchen enthaltende Fraktion getrennt wird.

2. Verfahren nach Anspruch 1, dadurch gekennzeichnet, daß das Verpackungsmaterial vor oder während des Waschvorgangs zerkleinert wird.

3. Verfahren nach Anspruch 2, dadurch gekennzeichnet, daß das Verpackungsmaterial in Stücke mit einer maximalen Erstreckung von 3 bis 7 cm zerkleinert wird.

4. Verfahren nach einem der Ansprüche 1 bis 3, dadurch gekennzeichnet, daß das Verpackungsmaterial vor dem Zerkleinern einer Vorwäsche unterzogen wird.

5. Verfahren nach einem der Ansprüche 1 bis 4, dadurch gekennzeichnet, daß als Spülmittel für den Waschvorgang im wesentlichen Wasser verwendet wird.

6. Verfahren nach einem der Ansprüche 1 bis 5, dadurch gekennzeichnet, daß die weitgehend von äußeren Verschmutzungen sowie vom Spülmittel befreiten Stücke in kleinere Flächenstücke mit einer maximalen Erstreckung von 0,5 bis 1,2 cm, vorzugsweise 0,8 cm zerkleinert werden.

7. Verfahren nach einem der Ansprüche 1 bis 6, dadurch gekennzeichnet, daß das Zerkleinern der Stücke zu kleineren Flächenstücken und die Behandlung der kleineren Flächenstücke im wässrigen Medium im wesentlichen gleichzeitig vorgenommen wird.

8. Verfahren nach einem der Ansprüche 1 bis 7, dadurch gekennzeichnet, daß für die Behandlung der kleineren Flächenstücke im wässrigen Medium Frischwasser oder gereinigtes Prozeßwasser verwendet wird.

9. Verfahren nach einem der Ansprüche 1 bis 8, dadurch gekennzeichnet, daß die im wesentlichen Plastikteilchen enthaltende Fraktion entwässert wird.

10. Verfahren nach Anspruch 9, dadurch gekennzeichnet, daß die entwässerten Thermoplastteile erforderlichenfalls getrocknet und in ein weiterverarbeitbares Thermoplastgranulat überführt werden.

11. Verfahren nach Anspruch 10, dadurch gekennzeichnet, daß die Trocknung und die Granulierung der Thermoplastteilchen bei Temperaturen unterhalb 180°C, vorzugsweise unterhalb 150°C erfolgt.

12. Verfahren nach einem der Ansprüche 1 bis 7, dadurch gekennzeichnet, daß die im wesentlichen Faserstoffe enthaltende Fraktion einer zweiten Sortierstufe unterworfen und der im wesentlichen aus Thermoplastteilchen bestehende Rejectanteil der im wesentlichen Thermoplastteilchen enthaltenden Fraktion zugeführt wird.

13. Verfahren nach einem der Ansprüche 1 bis 7, dadurch gekennzeichnet, daß die im wesentlichen Thermoplastteilchen enthaltende Fraktion einer Naßwäsche unterworfen wird und daß die ausgewaschenen Faserstoffe der im wesentlichen Faserstoffe enthaltenden Fraktion zugeführt werden.

14. Anwendung des Verfahrens nach einem der Ansprüche 1 bis 13 auf mit Thermoplasten beschichtetes Verpackungsmaterial, das zusätzlich zumindest teilweise mit Aluminium beschichtet ist, dadurch gekennzeichnet, daß die nach dem Abtrennen der im wesentlichen Faserstoffe enthaltenden Fraktion verbleibende Fraktion in eine im wesentlichen reine Thermoplastteilchen enthaltende und eine aluminiumhaltige Thermoplastteilchen enthaltende Unterfraktion aufgeteilt wird.

15. Verfahren nach Anspruch 14, dadurch gekennzeichnet, daß die Aufteilung in die Unterfraktionen mittels einer Hydrozykloneinrichtung, ausgehend von einer Flüssigkeit mit weniger als 1 Gew.-% suspendierter Teilchen vorgenommen wird.

## Claims

1. Method for reprocessing used thermoplastic-coated packing material comprising a substrate essentially consisting of vegetable fibre substances, by comminution of the packing material, dissolution of the substrate in an aqueous suspension and separation of the suspension into a fraction largely containing fibrous materials and a fraction largely containing thermoplastic elements, whereby
- the packing material is comminuted to pieces of maximum extent 10 cm and a rinsing agent essentially consisting of water;
- the rinsing agent is collected, routed in the circuit and a part of the rinsing agent is constantly drawn off the circuit and routed to a biological clarification unit;
- the sections largely cleaned of external contamination are comminuted by tools performing a cutting and/or tearing action or a cutting type action into smaller sheet pieces with a maximum size of 2 cm;
- the small sheet pieces are treated in an aqueous medium under the effect of crushing, friction and/or shear forces;
- a suspension containing the disintegrated fibrous materials and the thermoplastic elements forming the outer surface of the sheet pieces, cleaned of fibrous materials, is produced and finally
- the suspension is separated into an initial fraction essentially containing fibrous material and a second fraction essentially containing plastic particles.

2. Method as per Claim 1, characterized in that the packing material is comminuted before or during the washing process.

3. Method as per Claim 2, characterized in that the packing material is comminuted to produce small sheet pieces of maximum size 3 to 7 cm.

4. Method as per one of Claims 1 to 3, characterized in that the packing material is subjected to pre-washing before comminution.

5. Method as per one of Claims 1 to 4, characterized in that the rinsing agent used for the washing process is essentially water.

6. Method as per one of Claims 1 to 5, characterized in that the pieces largely cleaned from external contamination and from rinsing agent are comminuted into smaller sheet pieces of maximum see 0.5 to 1.2 cm, but preferably 0.8 cm.

7. Method as per one of Clams 1 to 6, characterized in that comminution of the pieces into smaller sheet pieces and treatment of the smaller sheet pieces in a aqueous solution is essentially undertaken at the same time.

8. Method as per one of Claims 1 to 7, characterized in that fresh or purified process water is used for treating the smaller sheet pieces in an aqueous medium.

9. Method as per one of Claims 1 to 8, characterized in that the fraction largely containing plastic particles is drained.

10. Method as per Claim 9, characterized in that the drained thermoplastic elements are dried if necessary and converted to a reprocessable thermoplastic granulate.

11. Method as per Claim 10, characterized in that drying and granulation of the thermoplastic particles takes place at a temperature below 180°C but preferably below 150°C.

12. Method as per one of Claims 1 to 7, characterized in that the fraction essentially containing fibrous materials is subjected to a second sorting stage and the reject portion essentially comprising thermoplastic particles is routed to the fraction essentially containing thermoplastic particles.

13. Method as per one of Claims 1 to 7, characterized in that the fraction essentially containing thermoplastic particles is subjected to post-washing and the fibrous materials flushed out are routed to the fraction essentially containing fibrous materials.

14. Application of the method as per one of Claims 1 to 13 to thermoplastic-coated packing materials, which are additionally coated with aluminium, characterized in that the fraction remaining after separation of the fraction essentially containing fibrous materials is divided into a sub-fraction essentially consisting of purely thermoplastic particles and a sub-fraction containing thermoplastic particles with an aluminium content.

15. Method as per Claim 14, characterized in that division into sub-fractions is obtained using a hydrocyclone device, based on a liquid with less than 1 % weight of particle sin suspension.

## Revendications

1. Procédé pour le retraitement d'une matière d'emballage usagée enduite de thermoplastiques, qui présente une matière de support constituée essentiellement par des substances fibreuses végétales, par broyage de la matière d'emballage, dissolution de la matière de support dans une suspension aqueuse et séparation de la suspension en une fraction contenant essentiellement des substances fibreuses et une fraction contenant essentiellement des fragments thermoplastiques,
dans lequel
- on broie la matière d'emballage pour obtenir des morceaux dont l'étendue maximale est de 10 cm et on la lave avec un agent de rinçage constitué essentiellement d'eau,
- on rassemble l'agent de rinçage, on le guide en cycle fermé et on évacue en continu une partie de l'agent de rinçage hors du cycle et on l'achemine en continu à une installation de clarification biologique,
- on broie les morceaux libérés dans une large mesure des salissures externes, au moyen d'ustensiles exerçant une fonction de découpe et/ou de déchirement ou encore une fonction analogue à une découpe, pour obtenir des morceaux superficiels plus petits dont l'étendue maximale est de 2 cm,
- on traite les morceaux superficiels plus petits dans un milieu aqueux en exerçant des forces de percussion, de frottement et/ou de cisaillement,
- on obtient une suspension contenant les substances fibreuses dissoutes et les fragments thermoplastiques libérés dans une large mesure des substances fibreuses et formant les surfaces externes des morceaux superficiels, et enfin
- on sépare la suspension en une première fraction contenant essentiellement des substances fibreuses et en une seconde fraction contenant essentiellement des particules plastiques.

2. Procédé selon la revendication 1, caractérisé en ce qu'on broie la matière d'emballage avant ou pendant le processus de lavage.

3. Procédé selon la revendication 2, caractérisé en ce qu'on broie la matière d'emballage pour obtenir des morceaux dont l'étendue maximale est de 3 à 7 cm.

4. Procédé selon les revendications 1 à 3, caractérisé en ce qu'on soumet la matière d'emballage avant le broyage à un prélavage.

5. Procédé selon les revendications 1 à 4, caractérisé en ce qu'on utilise comme agent de rinçage pour le processus de lavage essentiellement de l'eau.

6. Procédé selon les revendications 1 à 5, caractérisé en ce qu'on broie les morceaux libérés dans une large mesure des salissures externes et de l'agent de rinçage pour obtenir des morceaux superficiels plus petits dont l'étendue maximale est de 0,5 à 1,2 cm, de préférence de 0,8 cm.

7. Procédé selon l'une quelconque des revendications 1 à 6, caractérisé en ce qu'on procède au broyage des morceaux pour obtenir des morceaux superficiels plus petits et au traitement des morceaux superficiels plus petits en milieu aqueux essentiellement de manière simultanée.

8. Procédé selon l'une quelconque des revendications 1 à 7, caractérisé en ce qu'on utilise pour le traitement des morceaux superficiels plus petits en milieu aqueux, de l'eau fraîche ou de l'eau de traitement purifiée.

9. Procédé selon l'une quelconque des revendications 1 à 8, caractérisé en ce qu'on soumet la fraction contenant essentiellement des particules plastiques à une déshydratation.

10. Procédé selon la revendication 9, caractérisé en ce qu'on sèche, en cas de nécessité, les fragments thermoplastiques déshydratés et on les transforme en un produit de granulation thermoplastique apte à être retraité.

11. Procédé selon la revendication 10, caractérisé en ce que le séchage et la granulation des particules thermoplastiques ont lieu à des températures inférieures à 180°C, de préférence inférieures à 150°C.

12. Procédé selon l'une quelconque des revendications 1 à 7, caractérisé en ce qu'on soumet la fraction contenant essentiellement des substances fibreuses à une seconde étape de triage et on achemine la fraction de rejet constituée essentiellement par des particules thermoplastiques à la fraction contenant essentiellement des particules thermoplastiques.

13. Procédé selon l'une quelconque des revendications 1 à 7, caractérisé en ce qu'on soumet la fraction contenant essentiellement des particules thermoplastiques à un lavage à l'eau et on achemine les substances fibreuses séparées par lavage à la fraction contenant essentiellement des substances fibreuses.

14. Application du procédé selon l'une quelconque des revendications 1 à 13, à une matière d'emballage enduite de thermoplastiques, qui est en outre enduite au moins partiellement d'aluminium, caractérisée en ce qu'on répartit la fraction subsistant après la séparation de la fraction contenant essentiellement des substances fibreuses en une sous-fraction contenant essentiellement des particules thermoplastiques pures et en une sous-fraction contenant des particules thermoplastiques à teneur en aluminium.

15. Procédé selon la revendication 14, caractérisé en ce qu'on procède à la répartition en sous-fractions au moyen d'un mécanisme de type hydrocyclone à partir d'un liquide possédant une teneur inférieure à 1% en poids en particules mises en suspension.
